# EUROPÄISCHE PATENTSCHRIFT

(11) **EP 1 237 694 B1**
(45) Veröffentlichungstag und Bekanntmachung des Hinweises auf die Patenterteilung: **03.03.2004**
(21) Anmeldenummer: 00991159.5
(22) Anmeldetag: 11.12.2000
(51) Int. Cl.: B29C 37/00

(54) **VERFAHREN ZUR HERSTELLUNG VON FORMTEILEN SOWIE EINE VORRICHTUNG ZUR DURCHFÜHRUNG DIESES VERFAHRENS**
METHOD FOR THE PRODUCTION OF MOLDED PARTS AND DEVICE FOR IMPLEMENTING SAID METHOD
PROCEDE DE PRODUCTION DE PIECES MOULEES ET DISPOSITIF CORRESPONDANT

(30) Priorität: 14.12.1999 DE 19960220
(43) Veröffentlichungstag der Anmeldung: 11.09.2002
(73) Patentinhaber: Schock GmbH, 73614 Schorndorf (DE)
(72) Erfinder: HOCK, Klaus, 94209 Regen (DE); PATERNOSTER, Rudolf, 94269 Rinchnach (DE); PROBST, Alois, 94209 Regen (DE); SCHOCK, Joachim, 73547 Lorch-Waldhausen (DE)
(74) Vertreter: Crazzolara, Helmut, Dr.
(86) Internationale Anmeldenummer: PCT/EP2000/012503
(87) Internationale Veröffentlichungsnummer: WO 2001/043936

(56) Entgegenhaltungen:
- EP-A- 0 019 867
- EP-A- 0 354 017
- WO-A-92/10356
- WO-A-96/07532
- GB-A- 879 769
- US-A- 5 804 017

## Beschreibung

Die Erfindung betrifft ein Verfahren zur Herstellung von eine Sicht- und eine Rückseite aufweisenden Formteilen aus einer aushärtbaren Reaktionsmasse, wobei eine Gießform aus mehreren Gießformteilen zu einer während des Gieß- und Aushärteschritts im Wesentlichen unveränderlichen Konfiguration zusammengesetzt wird und einen Hohlraum bildet, in welchen die Reaktionsmasse gefüllt und ausgehärtet wird, wonach die Gießform geöffnet und das Formteil aus der Gießform entnommen wird.

Die Erfindung betrifft ferner eine Vorrichtung zur Durchführung eines solchen Verfahrens.

Ein Problem, das bei der Herstellung der zuvor beschriebenen Formkörper aus aushärtbaren Reaktionsmassen bedacht und berücksichtigt werden muß, ist, daß während des Aushärte- bzw. Polymerisationsprozesses eine Volumenverringerung (Schrumpf) des Polymermaterials auftritt, welche insbesondere bei Verwendung von Polyacryl- oder Polymethacryl-basierenden Reaktionsmassen ein erhebliches Ausmaß annimmt.

Um zu vermeiden, daß fehlerhafte Oberflächen erhalten werden, die das Formteil unverkäuflich machen, muß mindestens dafür gesorgt werden, daß die noch nicht ausgehärtete Gießmasse wenigstens an der Sichtseitenoberfläche der Gießform konstant anliegend bleibt.

Bisher wurden verschiedene Maßnamen hierzu empfohlen, mit denen teilweise praktisch perfekte Sichtseitenoberflächen erhalten wurden, die jedoch immer hoch verschiedene Nachteile, auf den Gesamtherstellungsprozeß der Formteile gesehen, aufweisen.

Zum einen wurde empfohlen, während des Polymerisations- bzw. Aushärteschrittes die Reaktionsmasse unter Fülldruck anstehen zu lassen (Nachdruckverfahren), das bedeutet, die Verbindung des Hohlraums der Gießform mit dem Vorratstank, der die aushärtbare Gießmasse enthält, bleibt mindestens während einer bestimmten Zeitdauer des Polymerisatiohsprozesses unter Fülldruck erhalten, so daß im Prinzip die durch den Schrumpf auftretende-Volumenverringerung der zunächst in die Gießform eingegebenen Gießmasse durch Nachliefern von frischen.Reaktionsmasseanteilen ausgeglichen werden kann. Der Erfolg dieser Maßnahme ist zum einen abhängig von der eigentlichen Form des Formteiles und insbesondere bei flächigen Gebilden mit einer geringen Wandstärke, wie z. B. Küchenspülen, oft nur schwierig erfolgreich durchzuführen, da während des Polymerisationsprozesses zunächst ein Gelieren der Reaktionsmasse einsetzt, was das Nachfördern von frischer Reaktionsmasse schwieriger macht. Darüber hinaus kann dies zu unerwünschten Verzögerungen des Aushärtevorganges führen, denn die zuletzt nachgelieferten Anteile an frischer Reaktionsmasse brauchen zusätzlich Zeit, um eine vollständige Aushärtung zu erfahren. Weitere damit verbundene Probleme sind eine oft unzureichende Verbindung der später eingespritzten Anteile der Reaktionsmasse mit den ursprünglich eingespritzten und Schwierigkeiten bei der Entformung.

Besondere Probleme bei der Nachlieferung von Material bieten die Ränder eines flächigen Produktes mit geringer Schichtdicke, wie dies beispielsweise bei Küchenspülen der Fall ist.

Ein alternativer Lösungsvorschlag bestand darin, eine Gießform zu verwenden, deren Gießformteile während des Polymerisationsprozesses unter Druck zusammengefahren werden kann, so daß das Hohlraumvolumen der Gießform während des Polymerisationsprozesses verringert wird (vgl. EP 0019867). Damit wird der auftretende Schrumpf mindestens an den sich senkrecht zur Schließrichtung erstreckenden flächigen Anteilen des Formteils ausgeglichen. Dieses Verfahren bedingt, daß die beiden Formhälften teleskopierend angeordnet und mittels einer elastischen Dichtung im Randbereich abgedichtet werden, welche beim Zusammenfahren verformbar ist. Der Nachteil bei dieser Methode liegt darin, daß ein sogenannter Gießrand mitgegossen werden muß, der sich eine vom eigentlichen Formteilrand zu der auf einer höheren Ebene vorgesehenen Dichtung erstreckt. Das Vorhandensein der Gießhaut bedingt aufwendige maschinelle Nacharbeiten, die Herstellungskosten deutlich erhöhen.

Die Gießhaüt könnte nur dann verringert werden, wenn die Formhälften mit ihren Randbereichen von Anfang an fest aufeinander liegen, was wiederum aber verhindert, daß diese sich während des Polymerisationsschrittes annähern und so eine Volumenverringerung im Umfange des Schrumpfes bewerkstelligen können. Für diesen Fall stand bislang nur das schon zuvor diskutierte Nachdruckverfahren zur Verfügung.

Die EP 0 354 017 A2 zeigt ein Verfahren zum Gießen von polymerisierbaren organischen Flüssigkeiten, bei dem eine Gießformoberfläche eine flexible Membran aus einem thermisch leitfähigen Elastomer aufweist. Die flexible Membran schließt einen Hohlraum ein, in dem eine unter Druck gesetzte Flüssigkeit zirkuliert, die zum Aushärten der polymerisierbaren organischen Flüssigkeit temperierbar ist.

Aufgabe der vorliegenden Erfindung ist es, ein gattungsgemäßes Verfahren bereitzustellen, das die Nachteile des Standes der Technik überwindet, insbesondere ein Verfahren zur Herstellung eines Formteiles wie eingangs angesprochen derart zu verbessern, daß die Formteile mit einem minimalen Aufwand an Nacharbeit erhalten werden können und das Verfahren einfach und dauerhaft kostengünstig durchführbar ist.

Diese Aufgabe ist dadurch gelöst, daß eine verformbare Gießformoberfläche verwendet wird, welche von einer Metallage gebildet wird, und daß bei der Verformung der verformbaren Gießformoberfläche die Metallage in Kontakt mit der Reaktionsmasse gehalten ist.

Bei diesem Verfahren werden die Randbereiche der Formteile direkt und von Anfang an aufeinander liegend positioniert, so daß das Entstehen einer Gießhaut vermieden werden kann. Durch die Verwendung einer verformbaren Gießformoberfläche zur Verringerung des Volumens des Hohlraums der Gießform wird nun die Möglichkeit geschaffen, den Volumenschwund durch den Schrumpf des Polymermaterials während des Aushärteschrittes zu kompensieren, und zwar nicht nur senkrecht zur Schließrichtung der Gießform, sondern, falls dies gewünscht ist, dreidimensional, d.h. im wesentlichen allseitig, und die verformbare Gießformoberfläche im wesentlichen die Rückseitenoberfläche der das Formteil bildenden Gießform ausmacht. Durch eine unterschiedliche Verformbarkeit verschiedener Bereich der verformbaren Gießformoberfläche können bei Bedarf gezielt Bereiche, bei denen ein höherer Schrumpf zu erwarten ist, mehr verformt werden als andere.

Vorzugsweise wird eine verformbare Gießformoberfläche verwendet, welche elastisch verformbar ist, so daß nach Beendigung des Aushärtevorgangs und nach dem Entformen sich die verformbare Gießform in ihre ursprüngliche Gestalt zurückbildet und somit wieder verwendet werden kann. Alternativ kann vorgesehen sein, insbesondere bei der Möglichkeit, preisgünstige verformbare Gießformoberflächen zu verwenden, auch plastisch verformbare Gießformoberflächen einzusetzen, welche dann jeweils nur für einen Gießvorgang verwendet werden können. Sollte die Formenrückseite keine größere Bedeutung für das Aussehen des Produktes haben, könnte dann die Gießformoberfläche an dem eigentlichen Formteil als verlorenes Teil verbleiben.

Letzteres ist insbesondere dann vorstellbar, wenn die verformbare Gießformoberfläche von einer Kunststofflage gebildet wird.

Bevorzugt wird die Verformung der verformbaren Gießformöberfläche pneumatisch oder hydraulisch erreicht, indem in ein Volumen zwischen der Gießformoberfläche und einer zugehörigen Stützform ein flüssiges oder gasförmiges Druckmedium eingespritzt wird.

Nachdem bei dem erfindungsgemäßen Verfahren das Problem des Schrumpfes durch eine Verformung der Gießformoberfläche und damit der Verringerung des Volumens der Gießform gelöst werden kann, bietet es sich an, die Reaktionsmasse in der Gießform nach der Befüllung von dem Vorrat zu trennen, d. h. die Gießmasse im Vorrat nicht weiter an der in die Gießform eingefüllten Masse anstehen zu lassen.

Bevorzugt wird die verformbare Gießformoberfläche die Rückseite des Formteiles bilden, so daß geringfügige Variationen in der Oberflächenqualität bzw. gegebenenfalls unterschiedlich über die Fläche einsetzende Verformungen ohne Nachteil auf das Aussehen des Formteiles in Kauf genommen werden können. Dies erlaubt insbesondere die Verwendung sehr dünner verformbarer Gießformoberflächen, und da insbesondere die Verwendung von plastisch verformbaren Gießformoberflächen, die als verlorenes Teil gegebenenfalls an dem Formteil verbleiben.

Vorzugsweise werden die Gießformteile mit direkt aufeinanderliegenden Randbereichen zusammengesetzt, wobei vorzugsweise zwischen den Randbereichen eine Dichtung eingelegt wird.

Das Aufeinanderliegen der Randbereiche führt zu einem definierten Rand des Formteiles, ohne daß zunächst in jedem Fall eine Dichtung zum Verhindern des Austritts von Anteilen der Gießmasse vorgesehen sein muß. Im Gegenteil kann es wünschenswert sein, daß dünnflüssige Beständteile der Gießmasse (insbesondere überschüssiges Monomeres) im Randbereich hoch aus der Form bzw. dem Hohlraum der Form ausfreteh kann, so daß zum einen ein Abfließen dieses überschüssigen Materials möglich ist, wobei selbstverständlich gleichzeitig auch die Form über diese aufeinanderliegenden Randbereiche während des Befüllens der Form entlüftet werden kann.

Um ein unkontrolliertes Austreten von Monomerem zu vermeiden, kann, wie zuvor genannt, zwischen den Randbereichen noch eine Dichtung eingelegt werden. Diese wird vorzugsweise in eine Nut eingelegt, so daß trotz allem die Randbereiche selber miteinander in Kontakt stehen können. Die Nut mit der eingelegten Dichtung dichtet dann außerhalb der aufeinanderliegenden Randbereiche die Gießform insgesamt zur Umgebung ab.

Als Dichtungsmaterial kann ein herkömmlicher O-Ring aus einem gegenüber der Reaktionsmasse beständigen Elastomer verwendet werden. Alternativ kann jedoch auch vorgesehen sein, ein Filzmaterial zu verwenden, was zum einen immer noch die Entlüftungsfunktion der Gießform aufrecht erhält, andererseits jedoch flüssige Anteile (insbesondere überschüssiges Monomeres), die aus dem Hohlraum der Gießform austreten, auffängt und verhindert, daß die Umgebung der Form verschmutzt wird.

In einer Reihe von Fällen kann bei Verwendung der Filzdichtung auf jede andere Form der Entlüftung verzichtet werden. Bevorzugt wird im Randbereich der Form, von der Dichtungsnut aus gesehen in Richtung zum Hohlraum der Gießform, eine möglichst ringsum laufende Kaverne oder Nut vorgesehen, in der überschüssiges Monomeres, das zwischen den aufeinanderliegenden Randbereichen hindurchtritt, aufgefangen werden kann. Durch die Vorgabe des Volumens der Nut (Kaverne) kann der Absetzvorgang des Füllstoffes gesteuert werden, wodurch wiederum die Produkte weitaus weniger oder gar keinen Verzug aufweisen. Diese Nut oder Kaverne wird vorzugsweise zwischen der umlaufenden Dichtung und der Kontaktlinie der Randbereiche, d. h. den Bereichen, in denen die Gießformteile direkt aufeihanderliegen und den Formenhohlraum zunächst abschließen, angeordnet.

Bei der Herstellung von Formteilen mit einer Beckenform mit einem Auslauf wird vorzugsweise im Bereich des Gießformteils, der den Auslauf umfaßt, ein Anschluß zur Herstellung einer Fließverbindung mit dem Vorrat an aushärtbarer Reaktionsmasse angeordnet werden.

Alternativ oder ergänzend kann ein Anschluß für die Herstellung einer Fließverbindung mit dem Vorrat an aushärtbarer Gießmasse auch an solchen Stellen des Formteils vorgenommen werden, an denen beispielsweise zur Befestigung des Formteils in einer Arbeitsplatte sogenannte Klammerböckchen oder zu anderen Zwecken eine größere Dicke des Formteils vorgesehen ist, so daß die in die Form einfließende Gießmasse, die ja zu erheblichen Anteilen anorganische Füllstoffe enthält, nicht zu einer Abrasion der gegenüberliegenden Gießformoberfläche führt.

In den Bereichen des Formteils, in denen später eine Durchgangsöffnung herzustellen ist, wird die Gießform vorzugsweise so ausgestaltet, daß die Gießformoberflächen der Sicht- und der Rückseite mit kleinem Abstand während des Aushartvorgangs positionierbar sind.

Bei der erfindungsgemäßen Gießform kann der Abstand der Gießformoberflächen beim Befüllen der Form zunächst durchaus größer sein und so ein exaktes Befüllen sämtlicher Formenbereiche ermöglichen und erst beim Verformen der verfombaren Gießformoberfläche den gewünschten minimalen Abstandswert zur Ausbildung der Sollbruchlinien annehmen.

Dadurch entstehen in den später durchzubrechenden Bereichen des Formteils sehr dünne Wandstärken, und der Durchbruch kann durch einfaches Ausschlagen des Formteilstücks mit einem Gummihammer oder dergleichen hergestellt werden. Hierfür empfiehlt es sich insbesondere, die Bereiche für die Durchgangsöffnungen so zu gestalten, daß die Gießformoberflächen entlang einer in sich geschlossenen Linie im wesentlichen aneinander anliegend positionierbar sind.

Die Erfindung betrifft ferner eine Vorrichtung zur Durchführungdes vorgenannten Verfahrens, wobei sich diese Vorrichtung dadurch auszeichnet, daß sie eine aus mehreren Teilen zusammensetzbare Gießform umfaßt, welche einen mit der Reaktionsmasse befüllbaren Hohlraum bildet, wobei mindestens ein Gießformteil eine Stützform und eine von dieser mindestens bereichsweise getrennt ausgebildete Gießformoberfläche aufweist, und daß die getrennt ausgebildete Gießformoberfläche zur Verringerung des Volumens des mit der Reaktionsmasse befüllbaren Hohlraums verformbar und/oder beweglich angeordnet ist.

Die erfindungsgemäße Gießform schafft die Möglichkeit, Formteile, insbesondere Formteile von komplizierter Gestalt, wie beispielsweise eine Küchenspüle mit mehreren Becken und einer Abtropffläche, mit einer Sichtseite und einer im Aussehen wesentlich verbesserten Rückseite herzustellen, wobei der Aufwand zur Nachbearbeitung des Formteils gegenüber den bislang herstellbaren Formteilen erheblich reduziert ist.

Dies wird insbesondere durch eine Volumenverringerung bzw. einen Volumenausgleich während der Polymerisationsphase durch eine Verformung eines Gießformoberflächenbereiches, vorzugsweise der Rückseitenhälfte der Form, erreicht. Dazu wird diese Formhälfte bzw. deren Oberfläche vorzugsweise aus einem elastischen Material, z. B. Nickel in dünner Blechform, Edelstahlblech oder Kunststoff, hergestellt.

Die verformbare Gießformoberfläche kann entweder als verlorenes Teil am Produkt bleiben (insbesondere in der Form eines billigen Kunststoffteils) oder wiederverwertet werden und ein permanentes Teil der Gießform bilden.

Bevorzugt umfaßt der Teil der Gießform, der die verformbare Gießformoberfläche beinhaltet, eine Stützform aus glasfaseryerstärktem Kunststoff und eine dünne Nickelblech-Gießformoberfläche, die elastisch verformbar ist. Die Volumenverminderung im Hohlraum der Gießform wird durch ein flüssiges Druckmedium erreicht, das man in den Zwisehenraum zwischen der Stützform und der dünnen Nickelblech-Gießformoberfläche einpreßt oder einspritzt. Zur gleichmäßigen Verteilung des Druckes und Regelung der Fließrichtung des Druckmediums sind in der Stützformoberfläche vorzugsweise Kanäle vorgesehen.

Die beiden Formhälften liegen bevorzugt Metall auf Metall flächig aufeinander. Die Dichtfläche, die sich dabei bildet, sollte um die Nachbearbeitung zu minimieren sehr eben und präzise angepaßt sein. Eine absolute Dichtheit ist durch die Auflage Metall auf Metall trotzdem nicht erreichbar. Deshalb wird vorzugsweise mit einem Abstand zum Formenhohlraum noch eine Nut für das Einlegen eines zusätzlichen Dichtungsmaterials (beispielsweise ein O-Ring) vorgesehen. Anstelle eines O-Ringes aus einem gegenüber der aushärtbaren Reaktionsmasse beständigen Elastomer kann auch ein Filzmaterial verwendet werden, wobei dieses den Vorteil bietet, daß es eine Entlüftung der Form während der Befüllung zuläßt. In diesem Fall kann gegebenenfalls auf eine andere Art der Entlüftung der Form sogar ganz verzichtet werden.

Die Füllpunkte der Form liegen entweder bei einer Abflußöffnung des Beckens oder bei einem sogenannten Klammerböckchen. Das Befüllen an Stellen, denen die Sichtseite der Form gegenüberliegt, ist nicht empfehlenswert, denn die vorzugsweise verwendeten Reaktionsmassen beinhalten hohe Anteile an anorganischen Füllstoffen, die bereits nach wenigen Füllungen Abrasionsmarken an der Sichtseite der Oberfläche der Spüle hinterlassen können. Diese bilden sich bei den nachfolgend hergestellten Formteilen sichtbar an der Oberfläche der Spüle ab.

Die mangelnde Dichtheit der Metall auf Metall liegenden Formhälften ist von nicht unbeträchtlichem Nutzen, da diese mangelnde Dichtheit erlaubt, daß überschüssiges Monomeres aus der Form drainiert werden kann. Das hat zur Folge, daß der Absetzvorgang des Füllstoffs gesteuert werden kann und dadurch die Produkte weniger oder gar keinen Verzug aufweisen. Um das Arbeiten mit solchen Formen angenehmer zu machen und Verschmutzungen der Umgebung mit Monomerem zu vermeiden, wird, vorzugsweise im Randbereich der Formen, eine umlaufende Kaverne vorgesehen, die überschüssiges und auftretendes Monomeres auffängt.

Schließlich kann außerhalb dieser umlaufenden Kaverne ein umlaufendes Dichtungsband vorgesehen werden, wie dies bereits zuvor beschrieben wurde.

Ein wesentlicher Vorteil der vorliegenden erfindungsgemäßen Vorrichtung bzw. des erfindungsgemäßen Verfahrens liegt darin, daß der Schrumpfausgleich nicht nur zweidimensional erfolgt, wie dies beim Zusammenfahren der Formhälften möglich ist, sondern gewissermaßen dreidimensional, da durch eine allseitige Beaufschlagung der verformbaren Gießformoberfläche in jeder Richtung im Raum eine Verformung erzielbar ist und so dem Schrumpf überall da begegnet werden kann, wo er beim Aushärten auch tatsächlich auftritt. Ein Verpressen oder Verschieben von bereits gelierten Reaktionsmasseanteilen in der Form wird dadurch weitestgehend vermieden.

Diese Vorteile resultieren letztendlich darin, daß man eine bessere, d. h. glattere und gleichmäßiger ausgebildete Rückseite des Formteiles erhält.

Darüber hinaus kann das Gewicht des Produktes wesentlich präziser eingehalten werden als bisher, da mit einer präzise vorgegebenen Menge an Reaktionsmasse gearbeitet werden kann und kein zusätzliches Material für den Schrumpfausgleich nachgeschossen werden muß. Dadurch besteht im weiteren die Möglichkeit, die Wandstärken des Formteils zu verringern und Material, das bisher aus Sicherheitsgründen wegen der zu hohen Gewichts- und Wanddickenschwankungen im einzelnen Formteil beigegeben wurde, einzusparen.

Dieser und weitere Vorteile der Erfindung werden im folgenden anhand der Zeichnung noch näher erläutert. Es zeigen im einzelnen:
- Figur 1:: einen Längsschnitt durch eine erfindungsgemäße Vorrichtung;
- Figur 2:: einen Schnitt längs Linie II-II der Figur 1;
- Figur 3:: eine Detailansicht aus der Schnittdarstellung der Figur 1; und
- Figur 4:: eine Draufsicht auf die Vorrichtung der Figur 1.

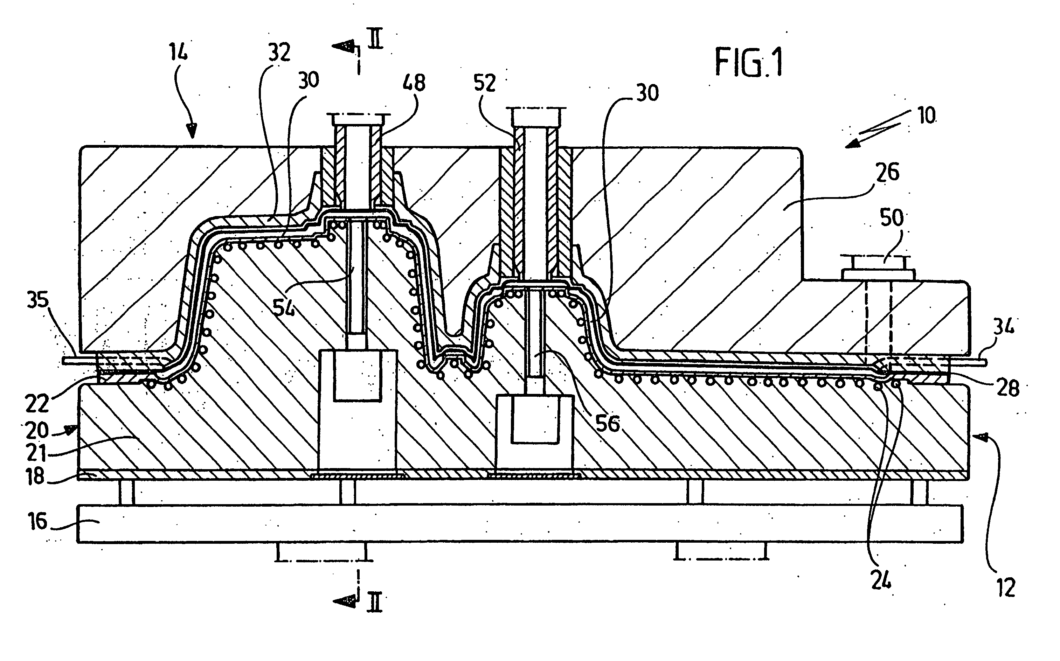

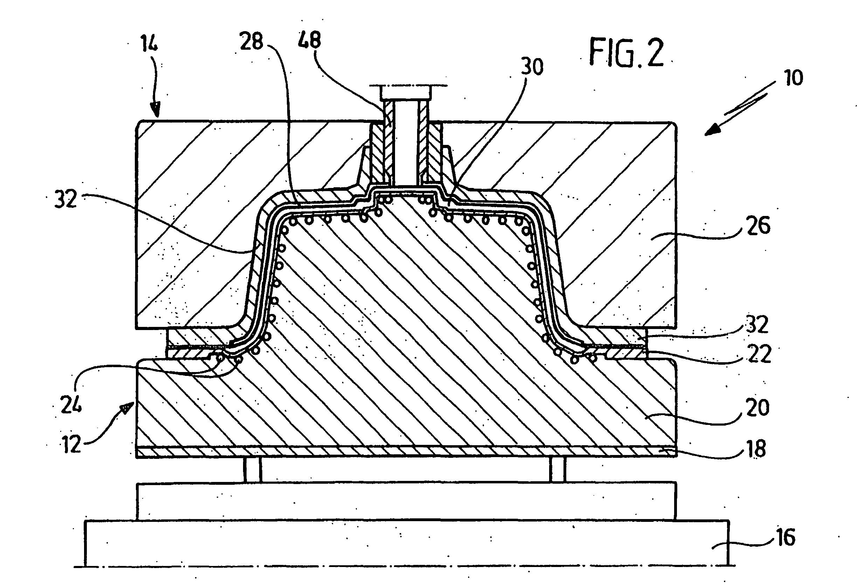

Die Figuren 1 und 2 zeigen eine insgesamt mit dem Bezugszeichen 10 bezeichnete Gießform mit einem Gießformunterteil 12 und einem Gießformoberteil 14. Das Gießformunterteil 12 ist auf einem Rahmen 16 und einer darauf abgestützten Platte 18 aufgebaut und umfaßt eine untere Stützform 20, welche als Positivform für die Herstellung einer Küchenspüle ausgestaltet ist und welche an ihrer Oberseite eine Beplankung mit einer dünnen Nickelschale 22 aufweist, welche von ihrer Rückseite her mittels eines Leitungssystems 24 temperierbar ist. Der zwischen der Platte 18 und der Nickelschale 22 verbleibende Hohlraum 21 ist mit Sand gefüllt, um eine gleichmäßige Druckübertragung zu gewährleisten. Durch das Leitungssystem 24 läßt man eine Heizflüssigkeit zirkulieren.

Das Gießformoberteil weist eine obere (negative) Stützform 32 auf, welche an ihrer Oberfläche eine dünne Nickelschale 28 trägt. Der auf der Rückseite der Stützform 32 verbleibende Hohlraum 26 wird mit Sand gefüllt.

Die Nickelschalen 22 und 28 bilden die Oberflächen des Gießformhohlraumes 30, wobei die Nickelschale 22 die Sichtseite der Küchenspüle bildet und die Nickelschale 28 die Rückseite.

Die Stützform 32 des Gießformoberteils 14 ist im wesentlichen aus glasfaserverstärktem Kunststoff aufgebaut.

Die Nickelschale 28 ist in ihrem montierten Zustand mit einem geringen Abstand gegenüber der Stützform 32 des Gießformoberteils 14 gehalten, der im wesentlichen über die gesamte Oberfläche der Nickelschale 28 bzw. der Oberfläche der Stützform 32 gleichförmig ist.

Der so gebildete Hohlraum ist mit Zuleitungen 34, 35 verbunden, welche an eine nicht gezeigte Hydraulikeinheit angeschlossen sind.

Über die Zuleitungen 34, 35 läßt sich ein flüssiges Druckmedium in den Zwischenraum zwischen die Stützform 32 und die Nickelschale 28 einpressen und so den Abstand zwischen Stützform 32 und der Nickelschale 28 variieren, so daß nachfolgend aufgrund der fixierten Stellung der Gießformober- und Unterteile gegeneinander eine Variation des Volumens des Gießformhohlraums 30 möglich ist.

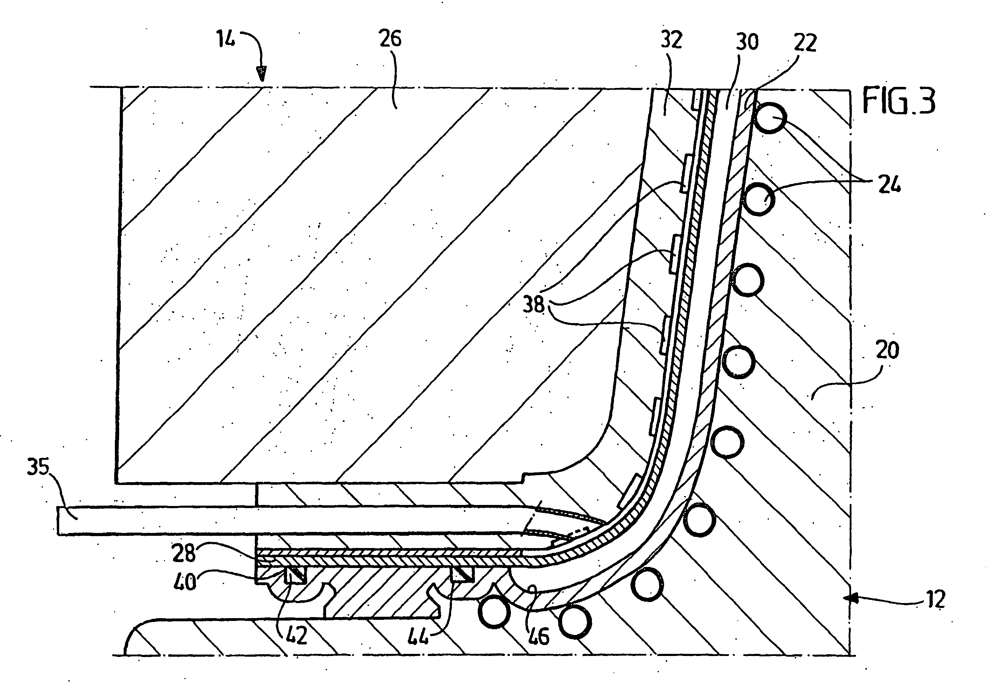

Figur 3 zeigt einen vergrößerten Ausschnitt aus der Figur 1, bei der die Ausbildung der Oberflächen der Teile der Gießform 10 im einzelnen ersichtlich ist.

Deutlich erkennbar ist die Anordnung von Leitungen 24 für die Temperierflüssigkeit direkt angrenzend an die Nickelschale 22 des Unterteils der Gießform, die somit die Temperierbarkeit der Sichtseitenoberfläche der Gießform sicherstellen.

Die die Rückseite des Formteils ausbildende verformbare Gießformoberfläche wird von der Nickelschale 28 gebildet, weiche die verformbare Gießformoberfläche der erfindungsgemäßen Gießform 10 realisiert.

In der Stützform 32 sind Kanäle 38 mit rechteckigem Querschnitt ausgespart, welche eine im wesentlichen gleichmäßige Zufuhr von Druckmedium auf die Rückseite der Nickelschale 28 zulassen, um so im wesentlichen eine gleichförmige Verringerung des Volumens 30 zu ermöglichen. Die Kanäle 38 sind letztendlich an die Zuleitungen 34 bzw. 35 (in Figur 3 nicht gezeigt) angeschlossen und erlauben während des gesamten Polymerisationsprozesses eine Volumensteuerung des Volumens 30.

Im Randbereich liegen die Gießformteile 12 und 14 plan aufeinander, wie dies insbesondere in Figur 3 ersichtlich ist. In dem hier verhältnismäßig breit gehaltenen Rand, in dem eine flächige Auflage von der Nickelschale 28 auf der Nickelschale 22 zustande kommt, ist eine Nut 40 vorgesehen, welche einen Dichtring 42 aufnimmt, der hier den dichtenden Abschluß der Gießform 10 gegenüber der Umgebung sicherstellt.

Von der Dichtung 42 aus gesehen weiter innen liegend beinhaltet der Randbereich des Gießformteils 12 eine weitere Nut 44, welche auch im zusammengebauten Zustand der Formen unbelegt bleibt und so eine Kaverne für aus der Gießform bzw. dem Gießformhohlraum 30 austretendes Monomer bildet.

Um eine Nachbearbeitung des fertigen Formteils möglichst einfach zu gestalten, ist es von elementarer Bedeutung, daß die Randbereiche der Gießformteile 12 und 14 sehr genau gearbeitet sind und eine exakte Planlage zueinander einnehmen können. Dadurch kann sich allenfalls ein fischhautartiger Fortsatz der Polymermasse vom Rand 46 des Formteils ausbilden, der mit einfachen Mitteln und ohne großen Zeitaufwand zu beseitigen ist. Im Gegensatz hierzu war bei der bisher bevorzugten Technologie, bei der das Oberteil 14 gegenüber dem Unterteil 12 während des Polymerisationsprozesses verfahren wurde, ein Abfräsen des am Formenrand sich ausbildenden Ansatzes (Gießrand) notwendig, was erheblichen Zeit- und Kostenaufwand bedeutete.

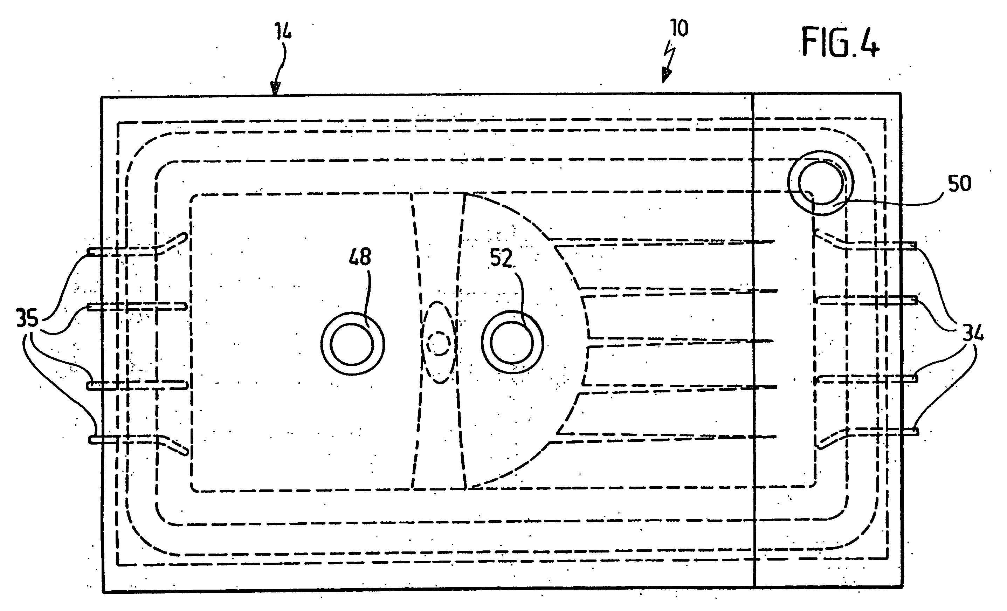

Figur 4 zeigt schließlich eine Draufsicht auf die erfindungsgemäße Gießform 10, bei der deutlich wird, daß bevorzugt mehrere Anschlüsse 34 und 35 verwendet werden, um das Druckmedium gleichmäßig über die verformbare Gießformoberfläche verteilt in die Gießform zu bringen.

Zur Befüllung der Form dient ein Befüllstutzen 48, der mit einem Hahn (nicht gezeigt) verschließbar ist. Die Entlüftung der Form kann über den Formenrand erfolgen, wenn in der Nut 42 gasdurchlässiges Dichtungsmaterial eingesetzt ist. Reicht die Gasdurchlässigkeit nicht aus oder wird gasdichtes Dichtungsmaterial in der Nut 42 eingesetzt, dann wird ein Entlüftungsstutzen 50 benötigt, der in einem Eckbereich der Spüle angeordnet ist. Beim Befüllen der Form wird diese so gekippt, daß der mit dem Entlüftungsstutzen 50 versehene Eckbereich den höchsten Punkt bildet und so ein vollständiges Befüllen der Form gewährleistet ist.

Nach dem Aushärten der Gießmasse oder Reaktionsmasse wird über einen Pneumatikzylinder 52 das Gießformoberteil 14 vom Unterteil 12 und dem dort verbleibenden Formteil (Küchenspüle) abgehoben. In einem weiteren Schritt wird dann mit Hilfe weiterer Pneumatikzylinder 54, 56 das Formteil von dem Gießformunterteil 12 abgehoben und dann zur Nachbearbeitung aus der Gießform 10 entfernt.

Die Nachbearbeitung umfaßt aufgrund der Verwendung der erfindungsgemäßen Gießform nur wenige und nicht zeitaufwendige Schritte. Zum einen können die Ausgußstellen der Form leicht von Hand oder mit einem Gummihammer ausgeschlagen werden, da diese vom restlichen Formkörper durch dünne Wandbereiche (Sollbruchstellen) abgegrenzt sind. Der Rand der Spüle braucht lediglich von Hand mit einem Schleifpapier versäubert werden, wobei Reste der sich beim Aushärten bildenden Fischhaut entfernt werden.

## Patentansprüche

1. Verfahren zur Herstellung von eine Sicht- und eine Rückseite aufweisenden Formteilen aus einer aushärtbaren Reaktionsmasse, wobei eine Gießform (10) aus mehreren Gießformteilen (12,14) zu einer während eines Gieß- und Aushärteschritts im wesentlichen unveränderlichen Konfiguration zusammengesetzt wird und einen Hohlraum (30) bildet, in welchem die Reaktionsmasse gefüllt und ausgehärtet wird, wonach die Gießform (10) geöffnet und das Formteil aus der Gießform (10) entnommen wird, bei der mindestens ein Gießformteil (12,14) eine verformbare Gießformoberfläche aufweist, und der Hohlraum (30) der Gießform (10) mit einer vorgebbaren Menge an aushärtbarer Reaktionsmasse aus einem Vorrat befüllt wird, wobei die Reaktionsmasse ausgehärtet wird, während durch eine Verformung der verformbaren Gießformoberfläche das Volumen des Hohlraums (30) der Gießform (10) verringert, wird, wobei eine verformbare Gießformoberfläche verwendet wird, und wobei das Formteil eine Beckenform aufweist, **dadurch gekennzeichnet, daß** die verformbare Gießformoberfläche von einer Metallage gebildet wird, daß bei der Verformung der verformbaren Gießformoberfläche die Metallage in Kontakt mit der Reaktionsmasse gehalten wird, daß die Beckenform des Formteils einen Auslauf aufweist, und daß bei dem Gießformteil (12,14), das den Bereich des Auslaufs des herzustellenden Formteils umfasst, im Bereich des Auslaufs die Verbindung mit dem Vorrat der aushärtbaren Reaktionsmasse hergestellt wird.

2. Verfahren nach Anspruch 1, **dadurch gekennzeichnet, daß** als Metallage eine Nickelschale (28) verwendet wird.

3. Verfahren nach Anspruch 1 oder 2, **dadurch gekennzeichnet, daß** die verformbare Gießformoberfläche in mindestens zwei, einen rechten Winkel einschließenden Raumrichtungen verformt wird.

4. Verfahren nach einem der Ansprüche 1 bis 3, **dadurch gekennzeichnet, daß** eine verformbare Gießformoberfläche verwendet wird, welche elastisch verformbar ist.

5. Verfahren nach einem der Ansprüche 1 bis 4, **dadurch gekennzeichnet, daß** die Verformung der verförmbaren Gießformoberfläche pneumatisch oder hydraulisch durchgeführt wird.

6. Verfahren nach einem der Ansprüche 1 bis 5, **dadurch gekennzeichnet, daß** die Reaktionsmasse nach der Befüllung der Form (10) von dem Vorrat getrennt wird.

7. Verfahren nach einem der Ansprüche 1 bis 6, **dadurch gekennzeichnet, daß** die verformbare Gießformoberfläche die Rückseite des Formteils ausbildet.

8. Verfahren nach einem der Ansprüche 1 bis 7, **dadurch gekennzeichnet, daß** die Gießformteile (12,14) mit aufeinanderliegenden Randbereichen zusammengesetzt werden, wobei vorzugsweise zwischen den Randbereichen eine Dichtung (42) eingelegt wird.

9. Verfahren nach Anspruch 8, **dadurch gekennzeichnet, daß** in den Randbereichen eine Nut (40) zur Aufnahme der Dichtung (42) vorgesehen wird.

10. Verfahren nach Anspruch 8 oder 9, **dadurch gekennzeichnet, daß** die Randbereiche formteilseitig direkt aufeinander liegen und daß zwischen der Stelle des direkten Kontakts der Randbereiche und der Dichtung (42) eine Kaverne (44) vorgesehen wird, in welche überschüssige Anteile der Reaktionsmasse, insbesondere Monomeres, abfließen können.

11. Verfahren nach einem der Ansprüche 1 bis 10, **dadurch gekennzeichnet, daß** in Bereichen des Formteils, in denen eine Durchgangsöffnung herzustellen ist, die Gießformoberflächen der Sicht- und Rückseite mit kleinem Abstand während des Aushärtvorgangs positioniert werden.

12. Verfahren nach Anspruch 11, **dadurch gekennzeichnet, daß** die Gießformoberflächen in den Bereichen für Durchgangsöffnungen im Wesentlichen aneinander anliegend positioniert werden.

13. Verfahren nach Anspruch 12, **dadurch gekennzeichnet, daß** die Gießformoberflächen entlang einer die Durchgangsöffnungen umfahrenden Kreislinie aneinander anliegend positioniert werden.

14. Vorrichtung zur Herstellung von eine Sicht- und eine Rückseite aufweisenden Formteilen aus einer aushärtbaren Reaktionsmasse, wobei die Vorrichtung eine aus mehreren Gießformteilen (12,14) zusammensetzbare Gießform (10) umfasst, welche einen mit der Reaktionsmasse befüllbaren Hohlraum (30) bildet, wobei mindestens ein Gießformteil (12,14) eine Stützform (20,32) und eine von dieser mindestens bereichsweise getrennt ausgebildete Gießformoberfläche aufweist und wobei die getrennt ausgebildete Gießformoberfläche zur Verringerung des Volumens des mit der Reaktionsmasse befüllbaren Hohlraums (30) verformbar ist, **dadurch gekennzeichnet, daß** die verformbare Gießformoberfläche von einer Metallage gebildet ist, daß bei der Verformung der verformbaren Gießformoberfläche die Metallage in Kontakt mit der Reaktionsmasse haltbar ist, daß das Formteil eine Beckenform mit einem Auslauf aufweist, und daß das Gießformteil (12,14), das den Bereich des Auslaufs umfasst, im Bereich des Auslaufs einen Anschluß zur Herstellung einer Fließverbindung mit dem Vorrat aufweist.

15. Vorrichtung nach Anspruch 14, **dadurch gekennzeichnet**, zwischen der getrennt ausgebildeten Gießformoberfläche und der Stützform (20,32) ein im Volumen variabler, mit einem Druckmedium beaufschlagbarer Hohlraum gebildet ist.

16. Vorrichtung nach Anspruch 15, **dadurch gekennzeichnet, daß** der im Volumen variable Hohlraum in die Stützform eingearbeitete, zur Gießformoberfläche hin offene Kanäle umfaßt.

17. Vorrichtung nach einem der Ansprüche 14 bis 16, **dadurch gekennzeichnet, daß** die Gießformteile (12,14) Randbereiche aufweisen, mit denen sie im zusammengebauten Zustand der Gießform (10) entlang einer in sich geschlossenen Kontaktlinie aneinander anliegen, wobei die Randbereiche vorzugsweise weiterhin Nuten (40) zur Aufnahme eines Dichtungsmaterials (42) umfassen.

18. Vorrichtung nach Anspruch 17, **dadurch gekennzeichnet, daß** das Dichtungsmaterial (42) aus gegen die aushärtbare Reaktionsmasse beständigem Elastomer oder einem Filzmaterial ausgewählt ist.

19. Vorrichtung nach Anspruch 17 oder 18, **dadurch gekennzeichnet, daß** die Randbereiche zwischen der Aufnahme (40) für das Dichtungsmaterial (42) und der Kontaktlinie eine Vertiefung (44) aufweisen.

20. Vorrichtung nach einem der Ansprüche 14 bis 19, **dadurch gekennzeichnet, daß** in Bereichen des Formteils, in denen eine Durchgangsöffnung herzustellen ist, die Gießformoberflächen der Sicht- und der Rückseite während des Aushärtvorgangs mit kleinem Abstand positionierbar sind.

21. Vorrichtung nach Anspruch 20, **dadurch gekennzeichnet, daß** die Gießformoberflächen in den Bereichen für Durchgangsöffnungen entlang einer in sich geschlossenen Trennlinie im wesentlichen aneinander anliegend positionierbar sind.

22. Vorrichtung nach Anspruch 20, **dadurch gekennzeichnet, daß** die Gießformoberflächen entlang einer die Durchgangsöffnungen umfahrenden Kreislinie aneinander anliegend positionierbar sind.

## Claims

1. Process for producing mouldings having a visible side and a rear side from a curable reaction composition, wherein a casting mould (10) is assembled from several casting mould parts (12, 14) to form an essentially unchangeable configuration during a casting and curing step and forms a cavity (30), in which the reaction composition is placed and cured, after which the casting mould (10) is opened and the moulding is removed from the casting mould (10), in which at least one casting mould part (12, 14) has a deformable casting mould surface, and the cavity (30) of the casting mould (10) is filled with a presettable quantity of curable reaction composition from a store, wherein the reaction composition is cured, while the volume of the cavity (30) of the casting mould (10) is reduced by deformation of the deformable casting mould surface, wherein a deformable casting mould surface is used, and wherein the moulding has a bowl shape, **characterised in that** the deformable casting mould surface is formed by a metal layer, **in that** during deformation of the deformable casting mould surface, the metal layer is kept in contact with the reaction composition, **in that** the bowl shape of the moulding has an outlet, and **in that** in the casting mould part (12, 14), which surrounds the region of the outlet of the moulding to be produced, the connection with the store of curable reaction composition is produced in the region of the outlet.

2. Process according to claim 1, **characterised in that** a nickel shell (28) is used as the metal layer.

3. Process according to claim 1 or 2, **characterised in that** the deformable casting mould surface is deformed in at least two spatial directions enclosing a right angle.

4. Process according to one of claims 1 to 3, **characterised in that** a deformable casting mould surface is used which can be deformed resiliently.

5. Process according to one of claims 1 to 4, **characterised in that** deformation of the deformable casting mould surface is carried out pneumatically or hydraulically.

6. Process according to one of claims 1 to 5, **characterised in that** the reaction composition is separated from the store after filling the mould (10).

7. Process according to one of claims 1 to 6, **characterised in that** the deformable casting mould surface forms the rear side of the moulding.

8. Process according to one of claims 1 to 7, **characterised in that** the casting mould parts (12, 14) are assembled with edge regions lying one on another, wherein a seal (42) is preferably placed between the edge regions.

9. Process according to claim 8, **characterised in that** a groove (40) is provided in the edge regions to receive the seal (42).

10. Process according to claim 8 or 9, **characterised in that** the edge regions lie directly one on another on the moulding side and **in that** a cavern (44), into which excess portions of the reaction composition, in particular monomer, may flow away, is provided between the point of direct contact of the edge regions and the seal (42).

11. Process according to one of claims 1 to 10, **characterised in that** the casting mould surfaces of the visible side and rear side are positioned at a short distance during the curing process in regions of the moulding in which a passage opening is to be produced.

12. Process according to claim 11, **characterised in that** the casting mould surfaces are positioned resting essentially one against another in the regions for passage openings.

13. Process according to claim 12, **characterised in that** the casting mould surfaces are positioned resting one against another along a circular line moving around the passage openings.

14. Device for producing mouldings having a visible side and a rear side from a curable reaction composition, wherein the device comprises a casting mould (10) which can be assembled from several casting mould parts (12, 14) and forms a cavity (30) which can be filled with the reaction composition, wherein at least one casting mould part (12, 14) has a supporting mould (20, 32) and a casting mould surface designed to be separate from the latter at least in some regions and wherein the separately designed casting mould surface can be deformed to reduce the volume of the cavity (30) which can be filled with the reaction composition, **characterised in that** the deformable casting mould surface is formed by a metal layer, **in that** during deformation of the deformable casting mould surface, the metal layer can be kept in contact with the reaction composition, **in that** the moulding has a bowl shape with an outlet, and **in that** the casting mould part (12, 14), which surrounds the region of the outlet, has a connection for producing a flow connection with the store in the region of the outlet.

15. Device according to claim 14, **characterised in that** a cavity of variable volume which can be exposed to a compressed medium is formed between the separately designed casting mould surface and the supporting mould (20, 32).

16. Device according to claim 15, **characterised in that** the cavity of variable volume comprises channels which are open towards the casting mould surface and incorporated into the supporting mould.

17. Device according to one of claims 14 to 16, **characterised in that** the casting mould parts (12, 14) have edge regions, with which they rest one against another in the assembled state of the casting mould (10) along a contact line closed in itself, wherein the edge regions preferably also comprise grooves (40) to receive a sealing material (42).

18. Device according to claim 17, **characterised in that** the sealing material (42) is selected from elastomer which is resistant to the curable reaction composition or a felt material.

19. Device according to claim 17 or 18, **characterised in that** the edge regions have a depression (44) between the take-up (40) for the sealing material (42) and the contact line.

20. Device according to one of claims 14 to 19, **characterised in that** the casting mould surfaces of the visible side and the rear side can be positioned at a short distance during the curing process in regions of the moulding, in which a passage opening is to be produced.

21. Device according to claim 20, **characterised in that** the casting mould surfaces can be positioned resting essentially one against another in the regions for passage openings along a separating line closed in itself.

22. Device according to claim 20, **characterised in that** the casting mould surfaces can be positioned resting one against another along a circular line moving around the passage openings.

## Revendications

1. Procédé de fabrication de pièces moulées, munies d'une face visible et d'une face arrière, à partir d'une matière réactive durcissable, un moule (10) étant assemblé au moyen de plusieurs parties de moule (12, 14) pour obtenir une configuration sensiblement invariable pendant une étape de moulage et de durcissement et en formant une cavité (30), dans laquelle la matière réactive est introduite et durcie, à la suite de quoi le moule (10) est ouvert et la pièce moulée est extraite du moule (10), dans lequel au moins une partie de moule (12, 14) comporte une surface de moulage déformable, et la cavité (30) du moule (10) est remplie avec une quantité à prédéfinir de matière réactive durcissable provenant d'un réservoir de stockage, la matière réactive se durcissant pendant que le volume de la cavité (30) du moule (10) est réduit par une déformation de la surface de moulage déformable, une surface de moulage déformable étant utilisée et la pièce moulée ayant la forme d'un bac, **caractérisé en ce que** la surface de moulage déformable est formée par une couche métallique, **en ce que**, pendant la déformation de la surface de moulage déformable, la couche métallique est maintenue en contact avec la matière réactive, **en ce que** la forme de bac de la pièce moulée comporte un orifice d'évacuation, et **en ce que** dans la partie de moule (12, 14), qui contient la zone de l'orifice d'évacuation de la pièce moulée à réaliser, la liaison avec le réservoir de stockage de la matière réactive durcissable est établie dans la zone de l'orifice d'évacuation.

2. Procédé selon la revendication 1, **caractérisé en ce que** la couche métallique est formée par une coque de nickel (28).

3. Procédé selon la revendication 1 ou 2, **caractérisé en ce que** la surface de moulage déformable est déformée dans au moins deux directions dans l'espace orientées perpendiculairement l'une à l'autre.

4. Procédé selon l'une quelconque des revendications 1 à 3, **caractérisé en ce qu'**on utilise une surface de moulage déformable qui est élastiquement déformable.

5. Procédé selon l'une quelconque des revendications 1 à 4, **caractérisé en ce que** la déformation de la surface de moulage déformable est effectuée par voie pneumatique ou hydraulique.

6. Procédé selon l'une quelconque des revendications 1 à 5, **caractérisé en ce que** la matière réactive, après le remplissage du moule (10), est séparée du réservoir de stockage.

7. Procédé selon l'une quelconque des revendications 1 à 6, **caractérisé en ce que** la surface de moulage déformable configure la face arrière de la pièce moulée.

8. Procédé selon l'une quelconque des revendications 1 à 7, **caractérisé en ce que** les parties de moule (12, 14) sont assemblées avec des zones de bordure superposées, une garniture d'étanchéité (42) étant insérée de préférence entre les zones de bordure.

9. Procédé selon la revendication 8, **caractérisé en ce qu'**une rainure (40), destinée à recevoir la garniture d'étanchéité (42), est prévue dans les zones de bordure.

10. Procédé selon la revendication 8 ou 9, **caractérisé en ce que** les zones de bordure du côté pièce moulée sont directement superposées et **en ce que**, entre la zone de contact direct des zones de bordure et la garniture d'étanchéité (42), est prévue une gorge (44) dans laquelle peuvent s'écouler les fractions excédentaires de la matière réactive, en particulier des monomères.

11. Procédé selon l'une quelconque des revendications 1 à 10, **caractérisé en ce que** dans certaines zones de la pièce moulée, dans lesquelles il faut réaliser un trou débouchant, les surfaces de moulage de la face visible et de la face arrière sont positionnées à faible distance l'une de l'autre pendant le processus de durcissement.

12. Procédé selon la revendication 11, **caractérisé en ce que** les surfaces de moulage sont positionnées sensiblement en contact l'une avec l'autre dans les zones pour les trous débouchants.

13. Procédé selon la revendication 12, **caractérisé en ce que** les surfaces de moulage sont positionnées sensiblement en contact l'une avec l'autre le long d'une ligne circulaire passant autour des trous débouchants.

14. Dispositif de fabrication de pièces moulées, munies d'une face visible et d'une face arrière, à partir d'une matière réactive durcissable, le dispositif comprenant un moule (10) à assembler à partir de plusieurs parties de moule (12, 14), qui forme une cavité (30) à remplir avec une matière réactive, au moins une partie de moule (12, 14) comportant un moule de support (20, 32) et une surface de moulage réalisée séparément au moins par zones, qui peut être déformée pour réduire le volume de la cavité (30) à remplir avec la matière réactive, **caractérisé en ce que** la surface de moulage déformable est formée par une couche métallique, **en ce que**, pendant la déformation de la surface de moulage déformable, la couche métallique peut être maintenue en contact avec la matière réactive, **en ce que** la pièce moulée est réalisée en forme de bac avec un orifice d'évacuation, et **en ce que** la partie de moule (12, 14), qui contient la zone de l'orifice d'évacuation de la pièce moulée à réaliser, comporte dans la zone de l'orifice d'évacuation un raccord destiné à établir une liaison fluidique avec le réservoir de stockage.

15. Dispositif selon la revendication 14, **caractérisé en ce qu'**une cavité à volume variable, pouvant être sollicitée par un fluide sous pression, est formée entre la surface de moulage réalisée séparément et le moule de support (20, 32).

16. Dispositif selon la revendication 15, **caractérisé en ce que** la cavité à volume variable comprend des canaux réalisés dans le moule de support et ouverts vers la surface de moulage.

17. Dispositif selon l'une quelconque des revendications 14 à 16, **caractérisé en ce que** les parties de moule (12, 14) ont des zones de bordure, par lesquelles lesdites parties de moule, à l'état assemblé du moule (10), sont en contact l'une avec l'autre le long d'une ligne de contact fermée en principe, les zones de bordure comportant en outre de préférence des rainures (40) destinées à recevoir un matériau d'étanchéité (42).

18. Dispositif selon la revendication 17, **caractérisé en ce que** le matériau d'étanchéité (42) est choisi parmi un élastomère résistant à la matière réactive durcissable ou un matériau de feutre.

19. Dispositif selon la revendication 17 ou 18, **caractérisé en ce que** les zones de bordure comportent une gorge (44) entre le logement (40) pour le matériau d'étanchéité (42) et la ligne de contact.

20. Dispositif selon l'une quelconque des revendications 14 à 19, **caractérisé en ce que**, dans les zones de la pièce moulée dans lesquelles il faut réaliser un trou débouchant, les surfaces de moulage de la face visible et de la face arrière peuvent être positionnées avec un faible écart pendant le processus de durcissement.

21. Dispositif selon la revendication 20, **caractérisé en ce que** les surfaces de moulage, dans les zones pour trous débouchants, peuvent être positionnées sensiblement en contact l'une avec l'autre le long d'une ligne de séparation fermée en principe.

22. Dispositif selon la revendication 20, **caractérisé en ce que** les surfaces de moulage peuvent être positionnées sensiblement en contact l'une avec l'autre le long d'une ligne circulaire passant autour des trous débouchants.
